(19) Europäisches Patentamt
European Patent Office
Office européen des brevets

(11) **EP 1 338 781 B1**

(12) **EUROPEAN PATENT SPECIFICATION**

(45) Date of publication and mention
of the grant of the patent:
**01.09.2010 Bulletin 2010/35**

(51) Int Cl.:
***F02D 41/40*** *(2006.01)*

(21) Application number: **03003742.8**

(22) Date of filing: **19.02.2003**

(54) **Accumulation type fuel injection system**

Speicherkraftstoffeinspritzsystem

Dispositif d'injection de combustible à accumulateur

(84) Designated Contracting States:
**DE ES FR GB IT**

(30) Priority: **20.02.2002 JP 2002043789**
**14.11.2002 JP 2002330439**

(43) Date of publication of application:
**27.08.2003 Bulletin 2003/35**

(73) Proprietors:
• **DENSO CORPORATION**
**Kariya-city,**
**Aichi-pref. 448-8661 (JP)**
• **Toyota Jidosha Kabushiki Kaisha**
**Toyota-city,**
**Aichi-pref 471-8571 (JP)**

(72) Inventors:
• **Oki, Mamoru**
**Kariya-city,**
**Aichi-pref. 448-8661 (JP)**
• **Sugiyama, Tatsumasa**
**Toyota-city,**
**Aichi-pref. 471-8571 (JP)**

(74) Representative: **TBK-Patent**
**Bavariaring 4-6**
**80336 München (DE)**

(56) References cited:
**EP-A- 0 570 986      DE-A- 19 712 143**
**US-B1- 6 311 669**

• **PATENT ABSTRACTS OF JAPAN vol. 1999, no. 11, 30 September 1999 (1999-09-30) & JP 11 159372 A (TOYOTA MOTOR CORP), 15 June 1999 (1999-06-15)**

## Description

The present invention relates to an accumulation type fuel injection system that performs a pilot injection before a main injection.

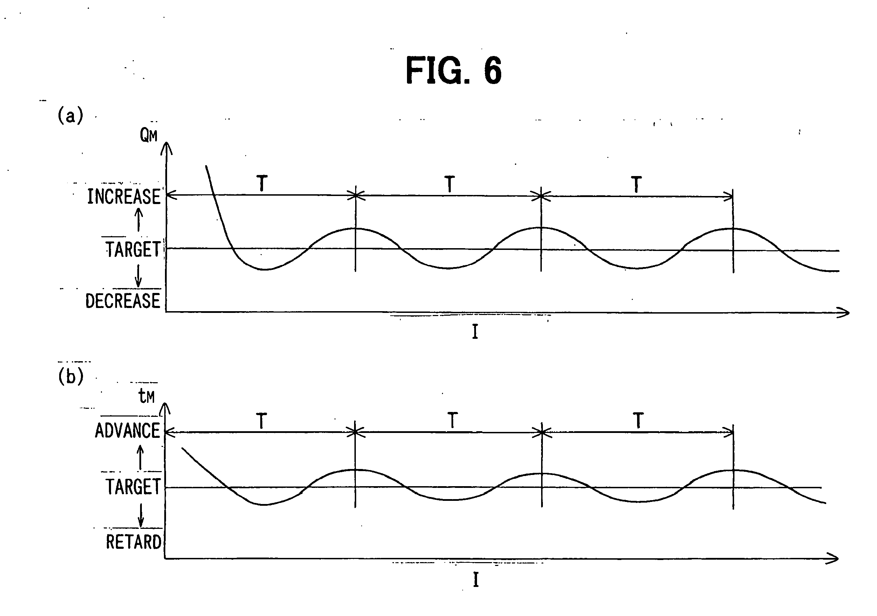

An accumulation type fuel injection system injects twice in one combustion cycle high-pressure fuel accumulated in a common rail from an injector to a diesel engine. In this fuel injection system, pressure pulsation develops during a pilot injection and affects a main injection. As a result, quantity and timing of the main injection fluctuate in accordance with variation in an injection interval, which is a time interval between the pilot injection and the main injection, as shown in FIG. 6, for instance. In FIG. 6, the axis $Q_M$ represents the main injection quantity and the axis $t_M$ represents the main injection timing. The axis I represents the injection interval and T represents the cycle of the pressure pulsation. The cycle T, or the cycle of the fluctuation in the main injection, is calculated from the following equation:

$$T=4L/V_P,$$

wherein L represents length of a high-pressure passage and $V_P$ is propagation speed of the pressure pulsation.

A fuel injection controller and a controlling method of an engine complying with the above problem are respectively disclosed in Japanese Patent Laid-Open Publication No. 6-101552 and Laid-Open Publication No. 10-266888. Each controller disclosed in the publications has a map storing correcting values for correcting the main injection quantity and the main injection timing in accordance with the injection interval. The controller calculates the correcting values from the map and corrects the main injection quantity and the main injection timing.

However, the above correction by the injection interval is not satisfactory. It is because the main injection quantity is affected by fluctuation in an injection delay period of the main injection. The injection delay period is a time interval from a starting time point of a main injection driving pulse to the starting time point of the actual main injection, and is fluctuated by the pressure pulsation.

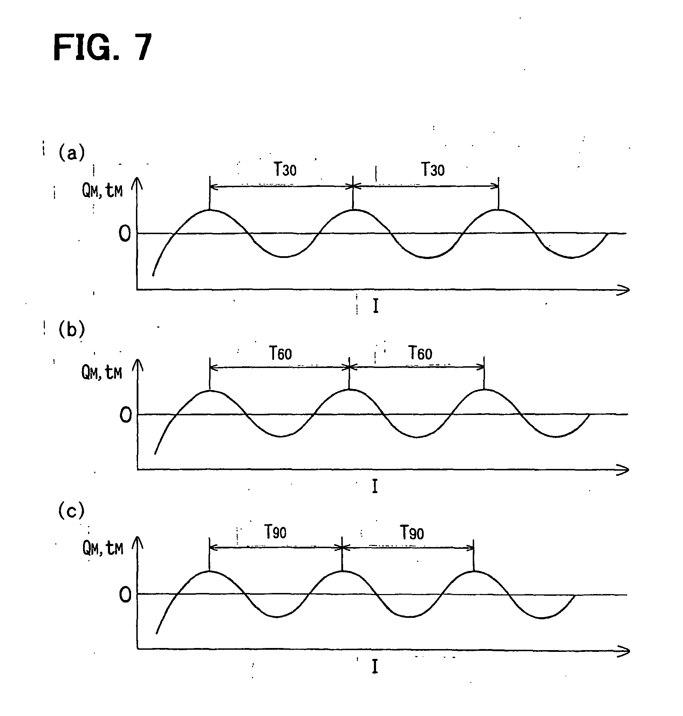

Moreover, a phase of the pressure pulsation changes depending on propagation speed of the pressure pulsation even if the injection interval is constant, causing mismatching between the correcting values and the injection interval. More specifically, the propagation speed of the pressure pulsation changes depending on the pressure, fuel temperature and pipe length, or operating conditions and environmental conditions. Accordingly, it is difficult to correct the main injection precisely if these factors are not considered. Therefore, the controller is required to have maps storing correcting values corresponding to respective pressures for instance, in order to comply with the change in the cycle of the pressure pulsation, as shown in FIG. 7. FIG. 7 (a) is a graph showing the fluctuation in the correcting values $Q_M$ and $t_M$ of the main injection in a case in which the pressure is 30 mega Pascal, and $T_{30}$ is a cycle of the pressure pulsation corresponding to the pressure. FIG. 7 (b) is a graph showing a case in which the pressure is 60 mega Pascal, and $T_{60}$ is a cycle of the pressure pulsation corresponding to the pressure. FIG. 7 (c) is a graph showing a case in which the pressure is 90 mega Pascal, and $T_{90}$ is a cycle of the pressure pulsation corresponding to the pressure. The cycles $T_{30}$, $T_{60}$ and $T_{90}$ differ from each other because of the pressure differences. However, if the controller has the maps storing the correcting values corresponding to the respective pressures, the number of the maps (data capacity) is increased. Moreover, the phase of the pressure pulsation is deviated by the fuel temperature, causing errors in the correcting values. In addition, the maps have to be renewed if the length of the high-pressure passage is changed.

Document US 6 311 669 B1 which can be regarded as most closely related to the subject matter of the invention, discloses a method for determining the injection time in an internal combustion engine. Pressure fluctuations occurring between two sequential injections, are considered. The pressure pulsation is described by using a sine wave.

It is therefore an object of the present invention to provide an accumulation type fuel injection system that performs precise correction of main injection quantity and main injection timing independently of operating conditions of an internal combustion engine or environmental conditions.

This object is solved by an accumulation type fuel injection system having the features of claim 1. An advantageous further development is stated in claim 2.

According to claim 1, the accumulation type fuel injection system, which performs fuel injection into each cylinder at least twice in one combustion cycle of an internal combustion engine, corrects a present injection in accordance with an interval between a preceding injection and the present injection. The fuel injection system calculates correcting values of the present injection, considering fuel pressure and fuel temperature in an accumulator chamber and length of a high-pressure passage.

The fuel injection system takes into consideration the propagation speed of pressure pulsation, which changes depending on the fuel pressure, the fuel temperature and the length of the high-pressure passage, when calculating the correcting values. Therefore, the present injection is precisely corrected independently of the changes in the operating conditions, the environmental conditions and the length of the high-pressure passage. The length of the high-pressure passage includes not only the length of a high-pressure pipe, but also the length of a passage leading from an opening end of the high-pressure pipe connected with the accumulator to an injection hole of a fuel injection valve.

Features and advantages of the present invention will be appreciated, as well as methods of operation and the function of the related parts, from a study of the following detailed description, the appended claims, and the drawings, all of which form a part of this application. In the drawings:

FIG. 1 is a schematic diagram showing an accumulation type fuel injection system according to an embodiment of the present invention;
FIG. 2 is a flowchart showing a processing sequence of ECU used in the embodiment of the present invention;
FIG. 3 is a time chart showing a driving current and an injection ratio of an injector according to the embodiment of the present invention;
FIG. 4 is a schematic diagram for explaining a pressure pulsation in a fuel injection system;
FIG. 5 shows correction maps of a main injection quantity and main injection timing according to the embodiment of the present invention;
FIG. 6 shows characteristic graphs showing a characteristic fluctuation of main injection quantity with respect to an injection interval, and a characteristic fluctuation of the main injection timing with respect to an injection interval; and
FIG. 7 shows correction maps of correcting values for the main injection corresponding to various pressures.

An embodiment of the present invention will be explained based on the drawings.

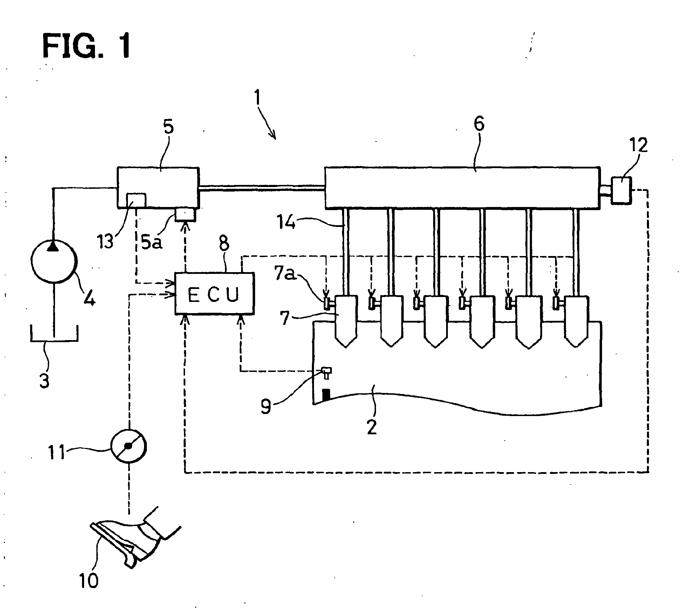

Referring to FIG. 1, an accumulation type fuel injection system 1 is applied to a six-cylinder diesel engine 2, for instance. The accumulation type fuel injection system 1 has a low-pressure pump 4, a high-pressure pump 5, a common rail 6, injectors 7, an electronic control unit (ECU) 8 and the like. The low-pressure pump 4 draws fuel from a fuel tank 3. The high-pressure pump 5 pressurizes the fuel drawn by the low-pressure pump 4 and discharges the fuel into the common rail 6. The common rail 6 accumulates the fuel pressure-fed from the high-pressure pump 5. The injector 7 injects the high-pressure fuel accumulated in the common rail 6 into each cylinder of the diesel engine 2. The ECU 8 controls the fuel injection system 1, specifically the high-pressure pump 5 and the injectors 7, based on operating conditions of the diesel engine 2.

The high-pressure pump 5 has an electromagnetic valve 5a in a fuel passage introducing into a pump chamber the fuel drawn by the low-pressure pump 4. Fuel discharging quantity from the high-pressure pump 5 is determined by opening and closing of the electromagnetic valve 5a.

The injector 7 has a nozzle needle for opening and closing an injection hole and is formed with a pressure chamber. Fuel pressure of the common rail 6 is applied on a back pressure side of the needle in the pressure chamber formed in the injector 7. An electromagnetic valve 7a is disposed in a low-pressure passage that connects the pressure chamber with a low-pressure part. When the electromagnetic valve 7a closes the low-pressure passage, the fuel pressure in the pressure chamber presses down the needle, and the needle closes the injection hole. When the electromagnetic valve 7a opens the low-pressure passage, the fuel in the pressure chamber flows out to the low-pressure part. Accordingly, the needle lifts and opens the injection hole.

The fuel injection system 1 has various sensors for detecting the operating conditions of the diesel engine 2, such as a rotation speed sensor 9 for detecting engine rotation speed, an accelerator position sensor 11 for detecting depressed degree of an accelerator pedal 10, a pressure sensor 12 for detecting the fuel pressure in the common rail 6, and a fuel temperature sensor 13 for detecting the fuel temperature in the high-pressure pump 5.

The ECU 8 calculates a target fuel pressure, a target common rail pressure, based on the detected operating conditions (the rotation speed and load) of the diesel engine 2. The ECU 8 controls fuel discharging quantity of the high-pressure pump 5 so that the actual common rail pressure detected by the pressure sensor 12 generally equals the target common rail pressure. The ECU 8 calculates injection quantity and injection timing based on the operating conditions of the diesel engine 2. The ECU 8 controls the injection timing by controlling energization timing of the electromagnetic valve 7a. The ECU 8 controls the injection quantity (the injection period) by controlling energization period of the electromagnetic valve 7a.

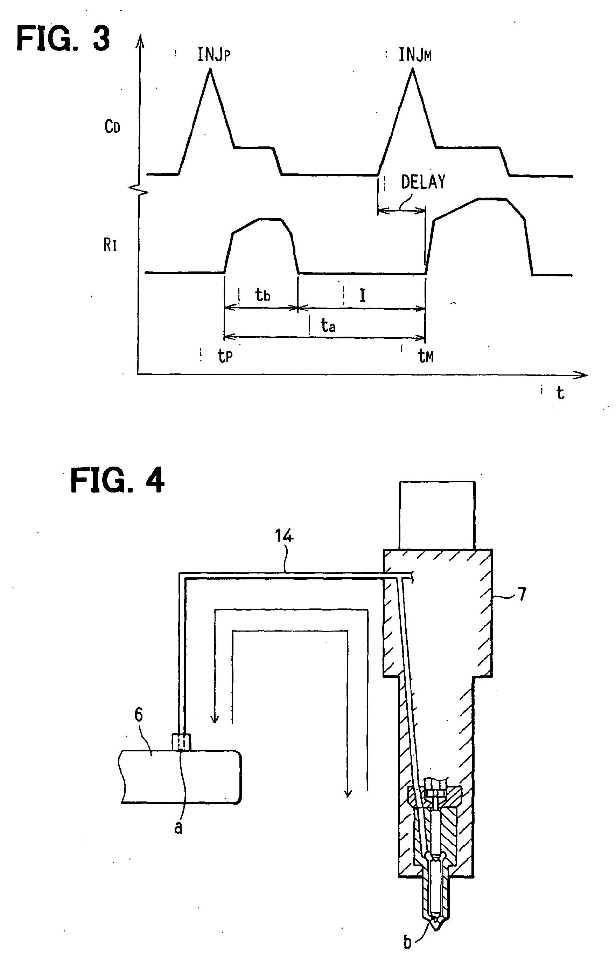

The fuel injection system 1 performs the fuel injection twice into each cylinder during one combustion cycle of the engine 2. More specifically, a main injection with a large injection ratio is performed after a pilot injection with a small injection ratio by performing the energization of the electromagnetic valve 7a twice, as shown in time charts in FIG. 3, for instance. In FIG. 3, a solid line $C_D$ is the driving current supplied to the electromagnetic valve 7a and a solid line $R_I$ is the injection ratio. A part $INJ_P$ in the line $C_D$ represents a rise, a pilot injection driving pulse, in the current value for the pilot injection and another part $INJ_M$ represents another rise, a main injection driving pulse, in the current value for the main injection.

However, if the two-step injection is performed, the pressure pulsation generated in the pilot injection travels back and forth between the common rail 6 and the injector 7 through a high-pressure pipe 14 as shown by arrow marks in FIG. 4. As a result, the main injection quantity and the main injection timing fluctuate with a certain cycle, a cycle of the pressure pulsation, as shown in FIG. 6. In order to comply with that, the fuel injection system 1 performs a main injection correcting operation for correcting the main injection quantity and the main injection timing.

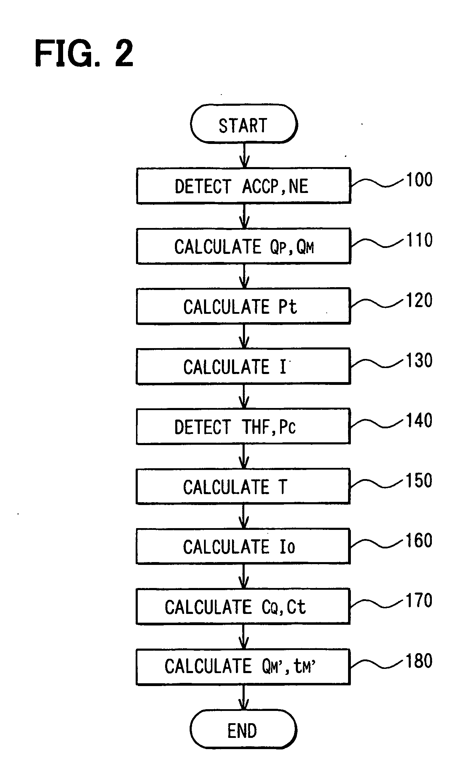

Next, a processing sequence of the ECU 8 for performing fuel injection control including the main injection correcting operation will be explained based on a flowchart shown in FIG. 2.

In step 100, sensor signals are inputted from the accelerator position sensor 11 and the rotation speed sensor 9 to detect the accelerator position ACCP and the engine rotation speed NE.

In step 110, the pilot injection quantity $Q_p$ and the main injection quantity $Q_M$ are calculated based on the operating conditions, the accelerator position ACCP and the engine rotation speed NE, of the diesel engine 2.

In step 120, the target fuel pressure $P_t$ is calculated to provide the optimum fuel injection pressure corresponding to the operating conditions of the diesel engine 2.

In step 130, an injection interval I between the pilot injection and the main injection is calculated. The injection interval I is a time interval from the ending time point of the pilot injection to the starting time point of the main injection, the main injection timing $t_M$. The injection interval I is calculated in a sequence explained below.

1) A time interval ta shown in FIG. 3 from the starting time point $t_p$ of the pilot injection to the main injection timing $t_M$ is calculated from a two-dimensional map of the engine rotation speed NE and the main injection quantity $Q_M$.
2) An actual injection period tb in FIG. 3 of the pilot injection is calculated from the target fuel pressure $P_t$ and the pilot injection quantity $Q_P$.
3) The injection interval I is calculated by subtracting the actual injection period tb from the time interval ta.

In step 140, sensor signals are inputted from the fuel temperature sensor 13 and the pressure sensor 12 to detect the fuel temperature THF and the fuel pressure, the common rail pressure $P_c$.

In step 150, the cycle of the pressure pulsation, the pulsation cycle T, developing during the pilot injection is calculated from the following equation:

$$T = 4L/V_p,$$

wherein L represents the length of the high-pressure passage, and $V_p$ is the propagation speed of the pressure pulsation.

The high-pressure passage length L is a length of a passage leading from the opening end "a", which is an opening between the high-pressure pipe 14 and the common rail 6, to a seat part "b" (injection hole) in the injector 7 as shown in FIG. 4.

The propagation speed $V_p$ of the pressure pulsation is calculated by the following equation:

$$V_p = \sqrt{(E/\rho)},$$

wherein E represents elastic coefficient of the fuel and $\rho$ is density of the fuel. The volume elastic coefficient E of the fuel is a function of the fuel pressure and the fuel temperature. The fuel density $\rho$ is a function of the fuel temperature.

In step 160, dimensionless interval $I_0$ is calculated by dividing the injection interval I calculated in the step 130 by the pulsation cycle T calculated in the step 150.

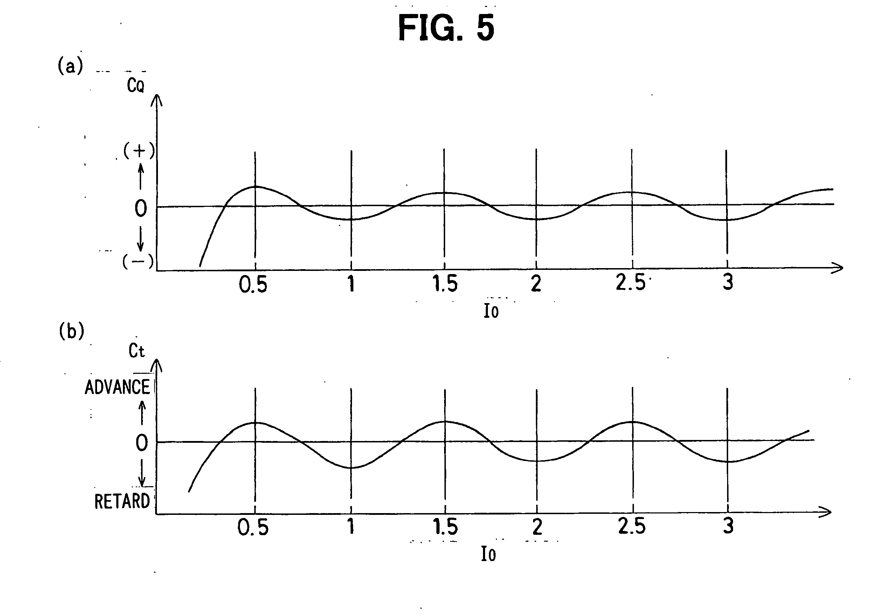

In step 170, correcting values corresponding to the dimensionless interval $I_0$ are calculated. The correcting values are related with the dimensionless interval $I_0$ in advance and are provided as correction maps. The correction maps includes a correction map for calculating a main injection quantity correcting value $C_Q$ shown in FIG. 5 (a) and another correction map for calculating a main injection timing correcting value $C_t$ shown in FIG. 5 (b). The correction maps are stored in the ECU 8.

In step 180, the correcting values $C_Q$ and $C_t$ calculated in step the 170 are respectively added to the main injection quantity $Q_M$ calculated in the step 110 and to the main injection timing $t_M$ calculated in the step 130. Thus, the final main injection quantity $Q_M$' and the final main injection timing $t_M$' are calculated.

In the embodiment, the correcting values of the main injection are stored in accordance with the dimensionless injection interval. More specifically, the ECU 8 stores the correcting values in which the propagation speed of the pressure pulsation is taken into consideration. Therefore, deviation in the phase caused by the pressure and the temperature is reduced, and the optimum correcting values are calculated in any operating conditions, the fuel pressure and the fuel temperature. As a result, the number of the maps for storing the correcting values (data capacity) is reduced. In addition, the same correction maps can be used even if the length of the high-pressure passage changes.

Thus, the effect of fluctuation in an injection delay period of the main injection is taken into consideration when the main injection is corrected. Therefore, the main injection is corrected precisely.

The present invention is applicable to a fuel injection system that performs the fuel injection three or more times during one combustion cycle. In a case in which the fuel injection system performs three injections including a pilot injection, a main injection and an after injection in that order, a pilot interval between the pilot injection and the main injection is corrected effectively, and moreover, a main interval between the main injection and the after injection is corrected effectively.

In the embodiment, the injection interval I is the time interval from the ending time point of the pilot injection to the starting time point of the main injection. Alternatively, the dimensionless interval may be calculated from the time interval ta from the starting time point of the pilot injection to the starting time point of the main injection, because the pilot injection period is shorter than the cycle of the pressure pulsation.

An accumulation type fuel injection system (1) of a diesel engine (2) calculates a dimensionless interval ($I_0$) by dividing an injection interval (I) between a pilot injection and a main injection by a cycle (T) of pressure pulsation in an injection correcting operation for correcting the main injection. The fuel injection system (1) calculates correcting values corresponding to the dimensionless interval ($I_0$) from correction maps and calculates final main injection quantity ($Q_M$') and timing ($t_M$') by adding the correcting values ($C_Q$, $C_t$) to main injection quantity ($Q_M$) and timing ($t_M$) calculated based on operating conditions of the engine (2).

## Claims

1. An accumulation type fuel injection system (1) including an accumulation chamber (6) for accumulating fuel at a high pressure and a fuel injection valve (7) for injecting the high-pressure fuel accumulated in the accumulation chamber (6) through a high-pressure pipe (14), into a cylinder of an internal combustion engine (2),
   wherein the fuel injection system (1) performs fuel injection at least twice during a combustion cycle of the engine (2),
   wherein the fuel injection system (1) comprises an injection correcting means (8) for correcting a present fuel injection in accordance with an injection interval between a preceding injection and the present injection of the fuel injection valve (7) and correcting values calculated by considering fuel pressure and fuel temperature in the accumulation chamber (6) and length of a high-pressure passage including the high-pressure pipe (14),
   wherein the injection correcting means (8) stores in advance the correcting values corresponding to a dimensionless interval calculated by dividing the injection interval by a cycle of a pressure pulsation generated in the preceding injection, the pressure pulsation cycle being calculated from the following equation: $T = 4\ L/Vp$, where T represents the pressure pulsation cycle, L is the length of the high-pressure passage and Vp is the propagation speed of the pressure pulsation,
   wherein the correcting values are related with the dimensionless interval in advance and are provided as correction maps,
   wherein the fuel pressure and the fuel temperature are considered in the determination of a volumetric elasticity coefficient and a fuel density for the calculation of the propagation speed of the pressure pulsation.

2. The fuel injection system as in claim 1, wherein the propagation speed of the pressure pulsation is calculated from the following equation: $Vp = \sqrt{(E/\rho)}$, where E represents the volumetric elasticity coefficient of the fuel and $\rho$ is the density of the fuel.

3. The accumulation type fuel injection system (1) as in claim 1 or 2, further **characterized in that** the correcting values includes an injection quantity correcting value used for correcting injection quantity of the present injection and an injection timing correcting value used for correcting injection timing of the present injection.

4. The accumulation type fuel injection system (1) as in one of claims 1 to 3, further **characterized in that** the injection interval is a time interval from an ending time point (tp + tb) of the preceding injection to a starting time point ($t_M$) of the present injection.

5. The accumulation type fuel injection system (1) as in one of claims 1 to 3, further **characterized in that** the injection interval is a time interval from a starting time point (tp) of the preceding injection to the starting time point ($t_M$) of the present injection.

6. The accumulation type fuel injection system (1) as in claim 4 or 5, further **characterized in that** the fuel injection system (1) calculates the injection quantity of the present injection based on an accelerator position (ACCP) detected by an accelerator position sensor (11) and engine rotation speed (NE) detected by a rotation speed sensor (9), and calculates the injection timing of the present injection ($t_M$) based on the engine rotation speed (NE) and the injection quantity of the present injection, and corrects the present injection by adding the injection quantity correcting value and the injection timing correcting value to the injection quantity and the injection timing of the present injection respectively.

## Patentansprüche

1. Kraftstoffeinspritzsystem (1) nach Speicherart, mit einer Speicherkammer (6) zum Speichern von Kraftstoff unter einem hohen Druck und einem Kraftstoffeinspritzventil (7) zum Einspritzen des in der Speicherkammer (6) gespeicherten Hochdruckkraftstoffs durch ein Hochdruckrohr (14) in einen Zylinder einer Brennkraftmaschine (2),
   wobei das Kraftstoffeinspritzsystem (1) während einem Verbrennungszyklus der Maschine (2) wenigstens zweimal eine Kraftstoffeinspritzung durchführt,
   wobei das Kraftstoffeinspritzsystem (1) eine Einspritzungskorrektureinrichtung (8) zum Korrigieren einer gegenwärtigen Kraftstoffeinspritzung in Übereinstimmung mit einem Einspritzungsintervall zwischen einer vorhergehenden Einspritzung und der gegenwärtigen Einspritzung des Kraftstoffeinspritzventils (7) und Korrekturwerten, die durch Berücksichtigen eines Kraftstoffdrucks und einer Kraftstofftemperatur in der Speicherkammer (6) und einer Länge eines Hochdruckdurchgangs einschließlich des Hochdruckrohrs (14) berechnet sind,

wobei die Einspritzungskorrektureinrichtung (8) im Voraus die Korrekturwerte speichert, die einem dimensionslosen Intervall entsprechen, das durch Teilen des Einspritzungsintervalls durch einen Zyklus einer in der vorhergehenden Einspritzung erzeugten Druckpulsation berechnet wird, wobei der Druckpulsationszyklus aus der folgenden Gleichung berechnet wird: $T = 4 \cdot L/Vp$, wobei T den Druckpulsationszyklus darstellt, L die Länge des Hochdruckdurchgangs ist und Vp die Ausbreitungsgeschwindigkeit der Druckpulsation ist,

wobei die Korrekturwerte mit dem dimensionslosen Intervall im Voraus in Beziehung gesetzt werden und als Korrekturkennfelder bereitgestellt werden,

wobei der Kraftstoffdruck und die Kraftstofftemperatur bei der Bestimmung eines Volumenelastizitätskoeffizienten und einer Kraftstoffdichte für die Berechnung der Ausbreitungsgeschwindigkeit der Druckpulsation berücksichtigt werden.

**2.** Kraftstoffeinspritzsystem nach Anspruch 1, wobei die Ausbreitungsgeschwindigkeit der Druckpulsation aus der nachfolgenden Gleichung berechnet wird: $Vp = \sqrt{(E/\rho)}$, wobei E den Volumenelastizitätskoeffizienten des Kraftstoffs darstellt und $\rho$ die Dichte des Kraftstoffs ist.

**3.** Kraftstoffeinspritzsystem (1) nach Anspruch 1 oder 2, ferner **gekennzeichnet dadurch, dass** die Korrekturwerte einen zum Korrigieren der Einspritzmenge der gegenwärtigen Einspritzung verwendeten Einspritzmengenkorrekturwert und einen zum Korrigieren der Einspritzzeitsteuerung der gegenwärtigen Einspritzung verwendeten Einspritzzeitsteuerungskorrekturwert umfassen.

**4.** Kraftstoffeinspritzsystem (1) nach einem der Ansprüche 1 bis 3, ferner **gekennzeichnet dadurch, dass** das Einspritzintervall ein Zeitintervall von einem Endzeitpunkt (tp + tb) der vorhergehenden Einspritzung zu einem Startzeitpunkt ($t_M$) der gegenwärtigen Einspritzung ist.

**5.** Kraftstoffeinspritzsystem (1) nach einem der Ansprüche 1 bis 3, ferner **gekennzeichnet dadurch, dass** das Einspritzintervall ein Zeitintervall von einem Startzeitpunkt (tp) der vorhergehenden Einspritzung zu dem Startzeitpunkt ($t_M$) der gegenwärtigen Einspritzung ist.

**6.** Kraftstoffeinspritzsystem (1) nach Anspruch 4 oder 5, ferner **gekennzeichnet dadurch, dass** das Kraftstoffeinspritzsystem (1) die Einspritzmenge der gegenwärtigen Einspritzung basierend auf einer durch einen Beschleunigungsvorrichtungsstellungssensor (11) erfassten Beschleunigungsvorrichtungsstellung (ACCP) und einer durch einen Drehzahlsensor (9) erfassten Motordrehzahl (NE) berechnet, und die Einspritzzeitsteuerung der gegenwärtigen Einspritzung ($t_M$) basierend auf der Motordrehzahl (NE) und der Einspritzmenge der gegenwärtigen Einspritzung berechnet, und die gegenwärtige Einspritzung durch Addieren des Einspritzmengenkorrekturwerts und des Einspritzzeitsteuerungskorrekturwerts zu der Einspritzmenge bzw. der Einspritzzeitsteuerung der gegenwärtigen Einspritzung korrigiert.

## Revendications

**1.** Dispositif d'injection de combustible à accumulateur (1) comprenant une chambre d'accumulation (6) pour accumuler du combustible à une haute pression et une soupape d'injection de combustible (7) pour injecter le combustible à haute pression accumulé dans la chambre d'accumulation (6) à travers un tuyau de haute pression (14), dans un cylindre d'un moteur à combustion interne (2),

dans lequel le dispositif d'injection de combustible (1) effectue une injection de combustible au moins deux fois au cours d'un cycle de combustion du moteur (2), dans lequel le dispositif d'injection de combustible (1) comprend un moyen de correction d'injection (8) pour corriger une présente injection de combustible en fonction d'un intervalle d'injection entre une injection précédente et la présente injection de la soupape d'injection de combustible (7) et corriger des valeurs calculées en tenant compte de la pression de combustible et de la température de combustible dans la chambre d'accumulation (6) et de la longueur d'un passage de haute pression comprenant le tuyau de haute pression (14),

dans lequel le moyen de correction d'injection (8) mémorise à l'avance les valeurs de correction correspondant à un intervalle sans dimension calculé en divisant l'intervalle d'injection par un cycle d'une pulsation de pression générée dans l'injection précédente, le cycle de pulsation de pression étant calculé d'après l'équation suivante : $T = 4\ L/Vp$, où T représente le cycle de pulsation de pression, L est la longueur du passage de haute pression et Vp est la vitesse de propagation de la pulsation de pression, dans lequel les valeurs de correction sont, à l'avance, liées à l'intervalle sans dimension et sont fournies sous forme de cartes de correction,

dans lequel la pression de carburant et la température de carburant sont prises en compte dans la détermination d'un coefficient d'élasticité volumétrique et d'une densité de combustible pour le calcul de la vitesse de propagation de la pulsation de pression.

**2.** Dispositif d'injection de combustible selon la revendication 1, dans lequel la vitesse de propagation de la pulsation de pression est calculée d'après l'équation suivante : Vp = $\sqrt{(E/p)}$, où E représente le coefficient d'élasticité volumétrique du combustible et p est la densité du combustible.

3.  Dispositif d'injection de combustible à accumulateur (1) selon la revendication 1 ou 2, **caractérisé en outre en ce que** les valeurs de correction comprennent une valeur de correction de quantité d'injection utilisée pour corriger la quantité d'injection de la présente injection et une valeur de correction de timing d'injection utilisée pour corriger le timing d'injection de la présente injection.

4.  Dispositif d'injection de combustible à accumulateur (1) selon l'une quelconque des revendications 1 à 3, **caractérisé en outre en ce que** l'intervalle d'injection est un intervalle de temps d'un point de temps de fin ($t_p$ + tb) de la précédente injection à un point de temps de début ($t_M$) de la présente injection.

5.  Dispositif d'injection de combustible à accumulateur (1) selon l'une quelconque des revendications 1 à 3, **caractérisé en outre en ce que** l'intervalle d'injection est un intervalle de temps d'un point de temps de début ($t_p$) de la précédente injection au point de temps de début ($t_M$) de la présente injection.

6.  Dispositif d'injection de combustible à accumulateur (1) selon la revendication 4 ou 5, **caractérisé en outre en ce que** le dispositif d'injection de combustible (1) calcule la quantité d'injection de la présente injection sur la base d'une position d'accélérateur (ACCP) détectée par un capteur (11) de position d'accélérateur et d'une vitesse de rotation de moteur (NE) détectée par un capteur de vitesse de rotation (9), et calcule le timing d'injection de la présente injection ($t_M$) sur la base de la vitesse de rotation de moteur (NE) et de la quantité d'injection de la présente injection, et corrige la présente injection en ajoutant la valeur de correction de quantité d'injection et la valeur de correction de timing d'injection respectivement à la quantité d'injection et au timing d'injection de la présente injection.

# FIG. 1

# FIG. 2

```
              ┌─────────────┐
              │    START    │
              └─────────────┘
                     │
                     ▼
        ┌───────────────────────┐
        │   DETECT ACCP,NE      │⌇⌇──100
        └───────────────────────┘
                     │
                     ▼
        ┌───────────────────────┐
        │   CALCULATE QP,QM     │⌇⌇──110
        └───────────────────────┘
                     │
                     ▼
        ┌───────────────────────┐
        │    CALCULATE Pt       │⌇⌇──120
        └───────────────────────┘
                     │
                     ▼
        ┌───────────────────────┐
        │    CALCULATE I        │⌇⌇──130
        └───────────────────────┘
                     │
                     ▼
        ┌───────────────────────┐
        │   DETECT THF,Pc       │⌇⌇──140
        └───────────────────────┘
                     │
                     ▼
        ┌───────────────────────┐
        │    CALCULATE T        │⌇⌇──150
        └───────────────────────┘
                     │
                     ▼
        ┌───────────────────────┐
        │    CALCULATE Io       │⌇⌇──160
        └───────────────────────┘
                     │
                     ▼
        ┌───────────────────────┐
        │   CALCULATE CQ,Ct     │⌇⌇──170
        └───────────────────────┘
                     │
                     ▼
        ┌───────────────────────┐
        │  CALCULATE QM',tM'    │⌇⌇──180
        └───────────────────────┘
                     │
                     ▼
              ┌─────────────┐
              │    END      │
              └─────────────┘
```

# FIG. 3

# FIG. 4

# FIG. 5

(a)

(b)

EP 1 338 781 B1

# FIG. 6

(a)

(b)

EP 1 338 781 B1

# FIG. 7

(a)

(b)

(c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6101552 A
- JP 10266888 A
- US 6311669 B1